# EUROPÄISCHE PATENTSCHRIFT

(11) **EP 0 529 109 B1**
(45) Veröffentlichungstag und Bekanntmachung des Hinweises auf die Patenterteilung: **29.09.1993**
(21) Anmeldenummer: 91112924.5
(22) Anmeldetag: 01.08.1991
(51) Int. Cl.: A01K 31/14

(54) **Baumschonende Aufhängevorrichtung und Befestigungsdraht für Nistkästen in Edelstahl**
Tree-friendly stainless steel hanging device and suspension wire for nestboxes
Dispositif d'accrochage inoffensif pour les arbres et fil de suspension pour nichoir en acier inoxydable

(43) Veröffentlichungstag der Anmeldung: 03.03.1993
(73) Patentinhaber: Petsch, Emil, D-95173 Schönwald (DE)
(72) Erfinder: Petsch, Emil, D-95173 Schönwald (DE)

(56) Entgegenhaltungen:
- DE-A- 3 609 388
- DE-B- 1 079 882
- DE-C- 839 075
- FR-A- 457 338
- FR-A- 1 298 497
- US-A- 2 184 633

## Beschreibung

Die Erfindung betrifft eine Vorrichtung zur Aufhängung von Vogelnistkästen gemäß dem Oberbegriff des Patentanspruchs 1, sowie ein Verfahren zum Aufhängen von Vogelnistkästen gemäß Anspruch 7.

Eine Vorrichtung zur Aufhängung von Vogelnistkästen gemäß dem Oberbegriff des Patentanspruchs ist aus der FR-A 1 298 497 bekannt. Bei dieser Vorrichtung besteht das Befestigungselement, das in den Trägerbaum einzutreiben ist, aus einem Nagel, auf dem eine Scheibe mit einer ringförmig umlaufenden Nut zur Aufnahme einer Kordel anbringbar ist. Diese als Befestigungselemente dienenden Nägel müssen alle drei bis vier Jahre entfernt und durch neue Nägel an anderen Stelle am Trägerbaum ersetzt werden.

Bisherige von Herstellern oder Vertreibern angebotene Aufhängevorrichtungen zur Anbringung von Vogelnistkästen an Bäumen waren und sind immer noch nicht baumschonend. Bekannte Aufhängevorrichtungen für Vogelnistkästen sind dem Prospekt der Firma Karl Grund, Vogelschutzgeräte D-8425 Neustadt/ Donau und dem Prospekt der Firma Schwegler, Vogel- und Naturschutzprodukte GmbH, W-7060 Schorndorf zu entnehmen.

Erst in letzter Zeit hat sich die Erkenntnis durchgesetzt, daß ein Aluminumnagel für die Befestigung von Vogelnistkästen etwas herausstehen soll, damit der zuwachsende Baum die Aufhängung bis zum Aluminumnagelkopf von sich wegschieben kann. Das aus dem Baum herausragende, nach oben ansteigende Aluminiumnagelteilstück ist nicht voll nutzbar, denn 2,5 cm werden bei der Entfernung der Aluminiumnägel für eine Brettunterlage für das Arbeitswerkzeug, eine Beißzange benötigt. Wird nicht untergelegt, kann es bei der Entfernung der eingewachsenen Aluminiumnägel durch die Druckausübung mit der Beißzange zu Rindenverletzungen kommen. Bei derartigen Rindenverletzungen wird das wertvolle, untere Stück in der Regel vom Rotfäulepilz befallen.

Je nach Zuwachs der Trägerbäume müssen alle drei bis vier Jahre die zur Befestigung der Aufhängevorrichtung angebrachten Aluminiumnägel wieder entfernt und durch neue Aluminiumnägel an einer anderen Stelle am Trägerbaum ersetzt werden. Ein Trägerbaum für Vogelnistkästen soll in der Regel ca. 40 bis 50 Jahre zur Anbringung von Vogelnistkästen genutzt werden. Nach Entfernung des 5 mm starken Aluminiumnagels bleiben am Trägerbaum in der vorgesehenen Zeitspanne ca. zehn kleine nach oben ansteigende bis sich zu 10 mm erweiterende tiefe Löcher am Baum zurück, in welchen bei Niederschlägen das Wasser und die Rotfäulepilze eindringen können.

In früheren Jahren wurden von der Firma Grund an Forstämter ausgelieferte Aufhängevorrichtungen für Vogelnistkästen mit einer dreieckförmigen Abwinkelung in den Baum eingeschlagen und erst danach wurde die eigentliche starre Befestigung mit einem 5 cm Aluminiumnagel vorgenommen. Es ist bekannt, daß die Aufhängespiralen nach kurzer Zeit einwuchsen. Das Freilegen der zum Großteil total eingewachsenen Aufhängespiralen ist sehr zeit- und kostenaufwendig. Zum Großteil sind am Baum entstandene Verletzungen durch das Ausstämmen am Trägerbaum sehr tief und deswegen scheidet das betreffende, wertvolle untere Stammstück zur Verwertung als Nutzholz aus.

Eine Wiederverwendung der aus dem Baum entfernten verbogenen Aluminiumnägel ist nicht möglich.

Dementsprechend liegt der Erfindung die Aufgabe zugrunde, eine baumschonende Vorrichtung zur Aufhängung von Vogelnistkästen zu schaffen, die einen Ersatz durch eine neue Vorrichtung dieser Art erübrigt, sowie ein Verfahren zum Aufhängen von Vogelnistkästen.

Die Aufgabe wird erfindungsgemäß gelöst durch die Merkmale im kennzeichnenden Teil des Patentanspruchs 1.
Ein Verfahren zur Aufhängung von Vogelnistkästen ist im Patentanspruch 7 angegeben.

Durch Verwendung der Erfindung können Verletzungen am Trägerbaum für Vogelnistkästen vollständig ausgeschlossen werden. Zusätzlich wird die Anbringung von Nistkästen an Laubhartholzbäumen ermöglicht, welches früher nicht durchführbar war, da der 5 mm starke Aluminiumnagel sich beim Einschlagen verbog. Gerade im Hinblick auf den geschädigten Waldbestand kommt der baumschonenden Aufhängevorrichtung eine erhöhte Bedeutung zu.

In den vielen zurückliegenden Jahren konnten sich weder Hersteller noch Käufer von einem Aluminiumnagel für das Aufhängen von Vogelnistkästen trennen.

Neuerdings wird zwar der 7 oder 8 cm lange Aluminiumnagel nur noch bis zur Hälfte in die Aufhängevorrichtung eingeschlagen, aber das aus dem Trägerbaum herausragende Aluminiumnagelstück von 3 oder 4 cm ist nicht voll nutzbar, da zur Entfernung der eingewachsenen Aluminiumnägel ein Brettstück unter die Beißzange zu legen ist, ohne welches zu Quetschungen und Druckstellen an der Rinde und im Holz vom Trägerbaum kommt, welches durch die Erfindung ausgeschlossen werden kann.

Obwohl Eisen- oder Edelstahlholzschrauben in verschiedenen Abmessungen bekannt sind, wurde bis heute der Aluminiumnagel noch nicht durch eine Holzschraube zur Befestigung der Aufhängevorrichtung für Vogelnistkästen ersetzt. Beschädigungen am Trägerbaum für Vogelnistkästen können nur vermieden werden, wenn die bisher verwendeten Aluminiumnägel durch nichtrostende Edelstahlsechskantholzschrauben ersetzt werden. Selbst nach dem Ausschrauben der Edelstahlsechskantholzschraube bleibt diese gegenüber einem verbogenen Aluminiumnagel noch voll nutzbar. Mit der Erfindung wird das Einschlagen eines Nagels in den Trägerbaum - dieser Vorgang wird bei einem Trägerbaum für Nistkästen mindestens zehnmal oder öfter wiederholt - vermieden. Die Erfindung schafft eine neue echt baumschonende Aufhängevorrichtung in Edelstahl, die nach einer entsprechenden Vorbohrung bis zum Ende vom Gewinde hineingeschraubt und alljährlich bei der stattfindenden Nistkastenkontrolle durch Verwendung eines Ringsteckschlüssels durch Linksumdrehung bis zum Gewindeansatz zurückgeschraubt wird. Der speziell geformte Befestigungsdraht zur Aufhängung des Nistkastens ist sehr schnell angebracht und kann durch eine wechselseitige Befestigung in den Ringen von Nistkästen nicht aus der Führungsnut entgleiten oder sich selbst aushängen.

Eine Kostenabschätzung unter Beachtung der anfallenden Lohnkosten und der Wertverluste des Trägerbaumes ergibt, daß die nachfolgend vorgestellte Erfindung eine Kostenreduktion um mindestens den Faktor 7 ermöglicht.

Nachstehend wird die Erfindung anhand der beigefügten Zeichnungen im Einzelnen beschrieben.

Es zeigen:
- Fig. 1: die Edelstahlholzschraube der Aufhängevorrichtung in teilweise aufgebrochener Darstellung,
- Fig. 2: den Befestigungsdraht der Aufhängevorrichtung in Frontansicht in symbolisiert dargestellter, an der Halterung befestigter Weise, und
- Fig. 3: eine Seitenansicht des unteren Endbereiches eines Endes des Befestigungsdrahtes.

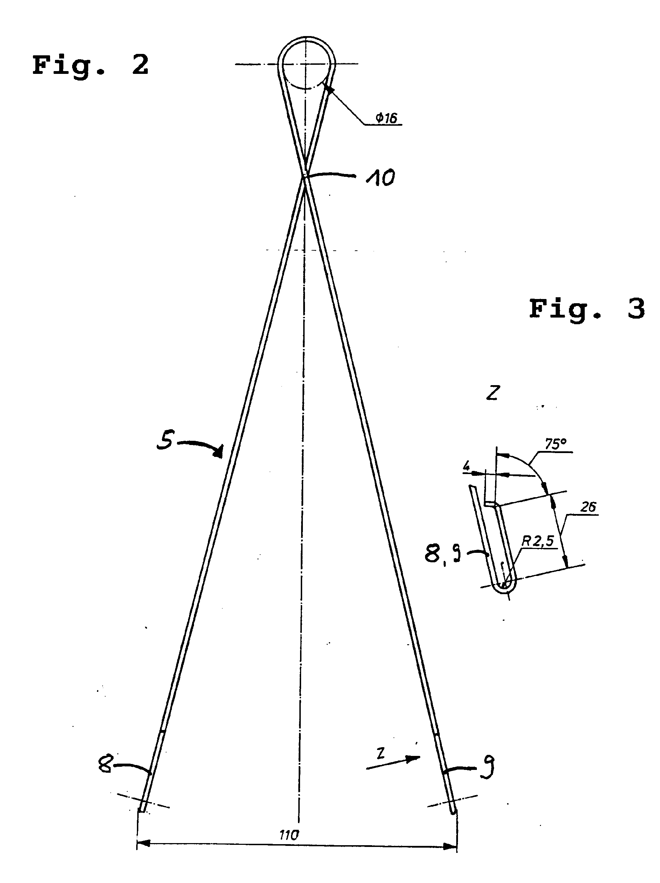

Eine baumschonende Aufhängevorrichtung 1 für Vogelnistkästen weist einen Befestigungsdraht 5 (Fig. 2) aus Edelstahl auf. Zur Aufnahme des Befestigungsdrahtes 5 ist die Aufhängevorrichtung 1 in Form einer Edelstahlsechskantholzschraube 2, insbesondere einer 7 mm starke Edelstahlsechskantholzschraube 2, mit einer Halterung 4 versehen, die in das kopfseitige Ende der Sechskantholzschraube hydraulisch gepreßt ist. Die Schraube 2 dient als Besfestigungselement an einem Baum, an dem ein Vogelnistkasten anzubringen ist.

Die Halterung 4 für den Befestigungsdraht 5 besteht ebenfalls aus Edelstahl.

In der Halterung 4 für den Befestigungsdraht 5 ist eine Bohrung 6 koaxial angeordnet, welche auf den verwendeten Schraubendurchmesser der Holzschraube 2 abgestimmt ist, wobei die Bohrung 6 knapp den Durchmesser der Edelstahlsechskantholzschraube 2 aufweist und die Edelstahlsechskantholzschraube 2 in die Halterung 4 hydraulisch einpreßbar oder einschlagbar ist.

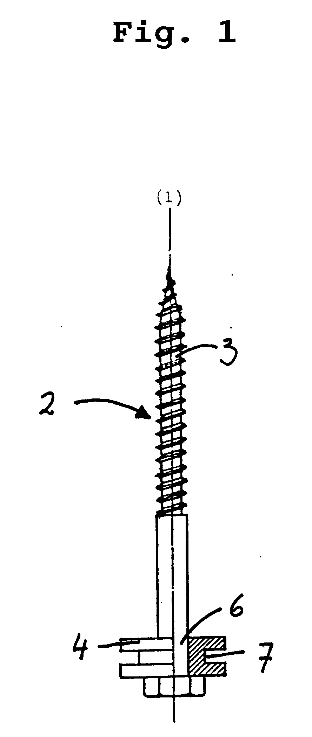

Weiterhin ist in der Halterung 4 des Befestigungsdrahtes 5 eine umlaufende Nut 7 zur Aufnahme des Befestigungsdrahtes 5 eingefräst, in welcher der aus Edelstahl hergestellte, gehärtete vorzugsweise 1,5 oder 2,0 mm im Durchmesser messende Befestigungsdraht 5 unverschiebbar und formstabil gehalten ist, wenn der Befestigungsdraht 5 in der Position zur Aufhängung des Vogelnistkastens angeordnet ist. Wie Fig. 1 zeigt, verläuft die Nut 7 senkrecht zur Achse der Schraube 2.

Der Befestigungsdraht 5 aus Edelstahl ist an seinen beiden Enden 8, 9 für die Einhängung des Nistkastens abgebogen und in Ringe von Nistkästen einhängbar, hierbei ist das U-förmig abgebogene Endstück jeweils über einen weiteren Bereich auf den gegenüberliegenden Schenkel des U-förmigen Bereiches des Befestigunsdrahtes 5 zu abgeknickt.

In weiterer Ausgestaltung der Erfindung besteht sowohl die Halterung 4 als auch der Befestigungsdraht 5 aus einem korosionsfesten und ermüdungsfreien Edelstahl.

Bei dem Verfahren zur baumschonenden Aufhängung von Vogelnistkästen wird in dem Trägerbaum eine Vorbohrung vorgenommen und in der Vorbohrung die Sechskantholzschraube 2 bis zum Ende ihres Gewindes 3 mit einem Ringsteckschlüssel eingeschraubt.

Durch Öffnen des überkreuzenden Bereiches 10 des Befestigungsdrahtes 5 kann der Befestigungsdraht 5 von oben nach unten in die Halterung 4 zur Aufnahme des Befestigungsdrahtes 5, insbesondere in die Nut 7 für die Aufnahme des Befestigungsdrahtes 5 eingeführt werden und der unter Spannung befindliche Befestigungsdraht 5 kann danach in seine von dem Befestigungsdraht 5 von selbst eingenommene, sich unterhalb der Halterung kreuzende Form dadurch gebracht werden, daß dessen beide Enden langsamer freigegeben werden.

Verwendbar sind für die Erfindung Sechskantholzschrauben mit einer Größe von 6 bis 8 mm, hierbei sollte der Schraubendurchmesser auf die Beanspruchung und Belastung abgestimmt sein, ein bevorzugter Durchmesser wurde zu 7 mm gewählt.

Vor Anbringung der neuen Aufhängevorrichtung muß durch Einsatz eines Bohrers bei Nadelholz von 5,5 mm Durchmesser und bei Laubhartholz von 6 mm Durchmesser vorgebohrt werden, bis die Sechskantholzschraube von Hand bis zu einem Widerstand eingedreht werden kann. Hierbei wird das Gewinde 3 der Sechskantholzschraube 2 mit Öl, insbesondere mit einem Fahrradöl, benetzt. Daran anschließend wird mit dem entsprechenden Ringsteckschlüssel der restliche Teil des Gewindes 3 der Sechskantholzschraube eingedreht. Sobald das Gewinde 3 im Baum verschwindet, wird das Eindrehen der Sechskantholzschraube 2 beendet. Danach wird der vorgefertigte, für die Aufhängevorrichtung 2 konstruierte, sich kreuzende 1,5 oder 2,0 mm starke Edelstahldraht mit beiden Händen auseinandergezogen und von oben in die eingefräste Nut 7 der Halterung 4 eingeführt. Anschließend wird der Nistkasten in die Rücklage gekippt und in den vorgefertigten Befestigungsdraht 5 mit den Befestigungsringen eingehängt. Nachdem der Nistkasten wieder in die senkrechte Lage gebracht wurde, hängt dieser korrekt am Baum. Bei der alljährlich stattfindenden Nistkastenkontrolle wird lediglich mit dem Ringsteckschlüssel durch Linksumdrehung der durch den Zuwachs verdeckte Gewindeteil 3 der Sechskantholzschraube 2 wieder freigelegt, bis gerade das Gewinde sichtbar wird. Eine Abnahme des am Befestigungsdraht 5 hängenden Nistkastens ist bei den Linksumdrehungen der Sechskantholzschraube nicht erforderlich. Ist der Trägerbaum für den Nistkasten in späteren Jahren durch irgendwelche Ereignisse (Blitzschlag, Käferbaum, Schnee- oder Rauhreifbruch, Windwurf) vorzeitig zu nutzen, wird der Nistkasten vorher in einfacher Weise dadurch abgenommen, daß der Befestigungsdraht 5 aus Edelstahl entfernt wird und die Aufhängevorrichtung für den Nistkasten durch Linksumdrehungen rausgeschraubt wird. Die baumschonende Halterung 4 in Edelstahlausführung und der vorgefertigte Befestigungsdraht 5 aus Edelstahl bleiben weiterverwendbar. Diese Anbringung der Aufhängevorrichtung 1 aus Edelstahl verhindert Verletzungen an der Rinde und hinterläßt keine größere Anzahl von kleinen Löchern und vermeidet mit Sicherheit Rinden- und Baumverletzungen am Trägerbaum, denn bis zur Nutzung verbleibt die Edelstahlsechskantholzschraube 2 im eingebohrten Loch am Trägerbaum.

## Patentansprüche

1. Vorrichtung aus Edelstahl zur Aufhängung von Vogelnistkästen, mit einem eine Halterung (4) tragenden Befestigungselement (2), wobei die Halterung (4) mit einer umlaufenden Nut (7) und einer Bohrung (6) versehen ist,
**dadurch gekennzeichnet**,
daß das Befestigungselement (2) eine Sechskantholzschraube ist, und daß ein Befestigungsdraht (5) zur Verbindung mit dem Vogelnistkasten einen kreuzförmigen Verlauf unter Bildung einer Öse hat, die in die Nut (7) eingesetzt wird.

2. Vorrichtung nach Anspruch 1,
**dadurch gekennzeichnet**,
daß die Sechskantholzschraube (2) 7 mm stark ist.

3. Vorrichtung nach einem der vorangehenden Ansprüche,
**dadurch gekennzeichnet**,
daß die Halterung (4) für den Befestigungsdraht (5) eine Bohrung (6) aufweist, welche auf den verwendeten Schraubendurchmesser der Edelstahlholzschraube (2) abgestimmt ist, wobei die Bohrung (6) knapp den Durchmesser der Edelstahlsechskantholzschraube (2) hat, und die Edelstahlsechskantholzschraube (2) in die Halterung (4) des Befestigungsdrahtes (5) hydraulisch einpreßbar oder einschlagbar ist.

4. Vorrichtung nach einem der vorangehenden Ansprüche,
**dadurch gekennzeichnet,**
daß in der Halterung (4) des Befestigungsdrahtes (5) eine Nut (7) zur Aufnahme des Befestigungsdrahtes (5) eingefräst ist, in welcher der gehärtete vorzugsweise 1,5 oder 2,0 mm im Durchmesser messende Befestigungsdraht (5) in der Halterung (4) unverschiebbar und formstabil gehalten ist.

5. Vorrichtung nach einem der vorangehenden Ansprüche,
**dadurch gekennzeichnet,**
daß der Befestigungsdraht (5) an seinen beiden Enden (8,9) für die Einhängung des Nistkastens abgebogen ist und in Ringe von Nistkästen einhängbar ist.

6. Vorrichtung nach einem der vorangehenden Ansprüche,
**dadurch gekennzeichnet**,
daß der Befestigungsdraht (5) mit seiner Öse zumindest teilweise fest auf der Nut (7) aufliegt.

7. Verfahren zum Aufhängen von Vogelnistkästen mittels der Vorrichtung nach wenigstens einem der vorangehenden Ansprüche, bei welchem an einem Trägerbaum eine Vorbohrung vorgenommen wird und in die Vorbohrung bis zum Ende des Gewindes (3) eine Sechskantholzschraube (6) mit Halterung (4) mittels eines Ringsteckschlüssels in den Baum eingeschraubt wird,
**dadurch gekennzeichnet**,
daß ein Befestigungsdraht (5) durch Öffnung des überkreuzenden Bereiches (10) des Befestigungsdrahtes (5) von oben nach unten in die Halterung (4) zur Aufnahme des Befestitungsdrahtes (5), insbesondere in die Nut (7) für die Aufnahme des Befestigungsdrahtes (5), eingeführt wird und der unter Spannung befindliche Befestigungsdraht (5) in seine von dem Befestigungsdraht von selbst eingenommene sich unterhalb der Halterung (4) kreuzende Form gebracht wird.

8. Verfahren zur baumschonenden Aufhängung von Vogelnistkästen nach Anspruch 7,
**dadurch gekennnzeichnet**,
daß das durch den Zuwachs des Baumes verdeckte Gewinde (3) der Edelstahlsechskantholzschraube (2) durch Linksumdrehungen ohne Abnahme des Nistkastens frei geschraubt wird.

## Claims

1. Stainless steel hanging device for nestboxes with a fastening element (2) carrying a holding device (4),with the latter (4) being provided with a circular groove (7) and a drill-hole (6),characterized by the follwing:the fastening element (2) is a six-sided wood-screw with a fixing wire (5) connecting the nestbox ,running crosswise thus forming a noose which is put Into the groove (7).

2. Device according to claim 1,characterized by the fact that the six- sided wood-screw (2) has a diameter of 7 mm.

3. Device according to one of the above mentioned claims,characterized by the fact that the holding device (4)for the fastening wire (5) has a drill-hole fitting the diameter of the stainless -steel wood-screw,with the drill-hole (6)approaching the diameter of the six-sided stainless- steel wood-screw (2), so that the six-sided stainless-steel wood-screw (2) can be hydraulically fitted into the holding device(4) of the fixing-wire (5).

4. Device according to one of the above-mentioned claims, characterized by the fact that in the holding device (4) of the fixing-wire (5) there is milled a groove (7),in which the tempered fixing wire (5), preferably of a diameter of 1.5 or 2.0 mm,is kept in the holding-device(4),immobile and keeping its form.

5. Device according to one of the above-mentioned claims, characterized by the fact that the fixing-wire (5) is bent at its two ends (8,9) and thus can be fitted into rings of nestboxes.

6. Device according to one of the above-mentioned claims, characterized by the fact that the fixing-wire (5)is at least partially inserted with its eyelet in the groove (7).

7. Hanging device for nestboxes by means of the contraption according to at least one of the above-mentioned claims,with which a hole is drilled in a carrier tree and a six-sided wood-screw (6) with a holding device (4) is screwed to the very end of its thread (3) by means of a tubular screw-key,characterized by the fact that a fixing wire (5) by opening the crossing range (10) of the fixing wire (5) is introduced downwards Into the holding device(4) for the fixing wire (5),particularly into the groove (7) for the insertion of the fixing -wire (5),thus the fixing -wire(S) under pressure Is brought Into its crossing position under the holding device (4).

8. Device for the tree-friendly hanging of nestboxes according to claim 7, characterized by the fact that the thread (3) of the six-sided stainless-steel wood-screw (2) covered by the tree's growth is screwed free by left turns without having to take off the nestbox.

## Revendications

1. Dispositif d'accrochage en acier inoxydable pour nichoir avec matériel de fixation (2,4) pourvu d'une rainure circulaire (7) et d'une forure (6).
Specification: le matériel de fixation(2),c'est une vis à bois hexagonale et un fil de suspension (5) arrangé en forme de croix,formant ainsi une élingue(anneau),qui est mise dans la rainure.

2. Dispositif selon spécification 1:
La vis à bois hexagonale(2) a 7 mm de diamètre.

3. Dispositif d'après l'une des spécifications mentionnées plus haut:
Le dispositif de fixation(4) pour le fil de suspension(S) est pourvu d'une rainure(6)accordée au diamètre de la vis à bois en acier inoxydable(2),la forure(6)correspondant à peine au diamètre de la vis à bois hexagonal en acier inoxydable (2), de sorte que la vis à bois hexagonale en acier inoxydable(2) puisse être enfoncée hydrauliquement dans le dispositif de fixation (4) du fil de suspension (5).

4. Disapositif selon l'une des spécifications précédentes:
Le dispositif de fixation (4) du fil de suspension (5) est pourvu d'une rainure pour maintenir le fil de suspension(S). Dans cette rainure, le fil de suspension trempé (5), préférablement d'un diamètre de 1,5 ou 2,0 millimètres, est tenu dans ledit dispositif (4),immobile et stable.

5. Dispositif selon l'une des spécifications précédentes:
Le fil de suspension (5) est courbé au deux bouts (8,9) pour l'accrochage du nichoir et peut être suspendu aux anneaux de nichoirs.

6. Dispositif d'après l'une des spécifications précédentes:
Le fil de suspension (5), avec son anneau est fixé, au moins partiellement, dans la rainure (7).

7. Dispositif d'accrochage pour nichoirs moyennant le procédé d'après au moins l'une des spécifications précédentes:
Dans l'arbre porteur un trou est foré où,à l'aide d'une clef à tube, la vis à bois hexagonale (6) avec le dispositif de fixation (4) est serrée dans l'arbre jusqu'au bout du filet.
Un fil de suspension (5),moyennant l'ouverture de la rangée croisante (10) dudit fil(5),est introduit de haut en bas dans le dispositif de suspension (5), notamment dans la rainure(7)pour ledit fil de suspension (5). Ainsi le fil de suspension( 5) sous pression est obligé de se croiser au-dessous du dispositif de fixation (4).

8. Dispositif d'accrochage de nichoirs, inoffensif pour les arbres d'après specification 7.:
Le filet (3) de la vis à bois hexgonale en acier inoxydable (2), recouvert par la croissance de l'arbre peut être déserré en tournant à gauche, sans qu'il soit nécessaire de décrocher le nichoir.
